(19) Europäisches Patentamt

European Patent Office

Office européen des brevets

(11) **EP 4 773 715 A1**

(12) **EUROPEAN PATENT APPLICATION**
published in accordance with Art. 153(4) EPC

(43) Date of publication:
08.07.2026 Bulletin 2026/28

(21) Application number: 23950711.4

(22) Date of filing: 29.08.2023

(51) International Patent Classification (IPC):
$H04W\ 74/08^{(2024.01)}$      $H04W\ 52/02^{(2009.01)}$
$H04W\ 72/02^{(2009.01)}$      $H04W\ 72/0446^{(2023.01)}$
$H04W\ 72/0453^{(2023.01)}$

(52) Cooperative Patent Classification (CPC):
H04W 52/02; H04W 72/02; H04W 72/0446;
H04W 72/0453; H04W 74/08

(86) International application number:
PCT/JP2023/031346

(87) International publication number:
WO 2025/046762 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NTT DOCOMO, INC.
Tokyo 100-6150 (JP)

(72) Inventors:
• KUMAGAI, Shinya
Tokyo 100-6150 (JP)

• OKANO, Mayuko
Tokyo 100-6150 (JP)
• NAGATA, Satoshi
Tokyo 100-6150 (JP)
• SUN, Weiqi
Beijing 100190 (CN)
• WANG, Jing
Beijing 100190 (CN)
• CHEN, Lan
Beijing 100190 (CN)

(74) Representative: Hoffmann Eitle
Patent- und Rechtsanwälte PartmbB
Arabellastraße 30
81925 München (DE)

(54) **DEVICE AND COMMUNICATION METHOD**

(57) This device has a lower degree of complexity than a Narrow Band-Internet of Things (NB-IoT), and comprises: a control unit that determines the execution of a random access procedure; and a communication unit that transmits and receives signals related to the random access procedure. The communication unit transmits and receives signals related to a random access procedure of the device by using a subcarrier smaller than a subcarrier of signals related to a random access procedure of the NB-IoT device.

20

RECEPTION SECTION 201

CONTROL SECTION 203

TRANSMISSION SECTION 202

FIG. 21

**Description**

Technical Field

The present disclosure relates to a device and a communication method.

Background Art

In New Radio (NR) (also referred to as "5G") that is a successor system of Long Term Evolution (LTE), a technology that satisfies a large-capacity system, a high data transmission speed, low delay, simultaneous connection of a large number of terminals, low cost, low power consumption, and the like as a requirement condition has been discussed (e.g., Non-Patent Literature (hereinafter, referred to as "NPL") 1).

Further, in Release 18 of 3GPP (registered trademark), Ambient Internet of Things (A-IoT) has been studied (e.g., NPL 2). In A-IoT, a device having an extremely simple configuration for a low-end IoT application that operates with extremely low power consumption is a target.

Citation List

Non-Patent Literature

NPL 1
3GPP TS 38.300 V17.3.0 (2022-12)
NPL 2
"New SID: Study on Ambient IoT", RP-222685, 3GPP TSG RAN Meeting #97-e, September 2022
NPL 3
3GPP TR 38.848 V0.1.0 (2023-03)
NPL 4
3GPP TS 36.211 V16.7.0 (2021-09)
NPL 5
3GPP TS 38.211 V17.5.0 (2023-06)

Summary of Invention

However, the studies on the handling of initial access in A-IoT have been insufficient, and further studies are required.

An aspect of the present disclosure is to provide a device and a communication method each capable of appropriately handling initial access.

Solution to Problem

A device according to one aspect of the present disclosure is a device having lower complexity than a Narrow Band-Internet of Things (NB-IoT) device, the device including: a control section that determines to execute a random access procedure; and a communication section that transmits and receives a signal related to the random access procedure, in which, the communication section transmits and receives the signal related to the random access procedure of the device by using a smaller number of subcarriers than one or more subcarriers for a signal related to a random access procedure of the NB-IoT device.

A communication method according to one aspect of the present disclosure is a method for a device having lower complexity than a Narrow Band-Internet of Things (NB-IoT) device, the communication method including: determining to execute a random access procedure; transmitting and receiving a signal related to the random access procedure; transmitting and receiving the signal related to the random access procedure of the device by using a smaller number of subcarriers than one or more subcarriers for a signal related to a random access procedure of the NB-IoT device.

Brief Description of Drawings

FIG. 1 is a diagram illustrating a configuration example of a radio communication system according to an embodiment;

FIG. 2 is a diagram illustrating Topology 1;

FIG. 3 is a diagram illustrating Topology 2;

FIG. 4 is a diagram illustrating Topology 3 in downlink (DL) assistance;

FIG. 5 is a diagram illustrating Topology 3 in uplink (UL) assistance;

FIG. 6 is a diagram illustrating Topology 4;

FIG. 7 is a diagram illustrating backscattering transmission;

FIG. 8 is a diagram illustrating a 4-step RACH;

FIG. 9 is a diagram illustrating a 2-step RACH;

FIG. 10 is a diagram illustrating Proposals 2 and 3;

FIG. 11 is a diagram illustrating Proposals 2 and 3;

FIG. 12 is a diagram illustrating Proposals 2 and 3;

FIG. 13 is a diagram illustrating Proposals 2 and 3;

FIG. 14 is a diagram illustrating Proposal 4;

FIG. 15 is a diagram illustrating Proposal 4;

FIG. 16 is a diagram illustrating Proposal 4;

FIG. 17 is a diagram illustrating Proposal 4;

FIG. 18 is a flowchart illustrating an operation example of Option 2 of Proposal 4;

FIG. 19 is a flowchart illustrating an operation example of Option 3 of Proposal 4;

FIG. 20 is a block diagram illustrating one example of a configuration of a base station according to the embodiment;

FIG. 21 is a block diagram illustrating one example of a configuration of a device according to the embodiment;

FIG. 22 is a diagram illustrating an example of a hardware configuration of the base station and the device according to the embodiment; and

FIG. 23 is a diagram illustrating a configuration example of a vehicle.

Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.
Existing techniques are used as appropriate for operations of a radio communication system in an embodiment of the present disclosure. Note that the existing techniques include, for example, existing LTE, but is not limited to existing LTE. Further, the term used in this specification, "LTE," has a broad meaning including LTE-Advanced and a system after LTE-Advanced (e.g., NR), unless otherwise specified.
Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-"

Further, in the embodiment of the present disclosure, a duplex system may be a Time Division Duplex (TDD) system, a Frequency Division Duplex (FDD) system, or another system (e.g., Flexible Duplex or the like).

Furthermore, in an embodiment of the present disclosure, the term "configured" with respect to a radio parameter or the like may refer to a predetermined value being preconfigured, or it may refer to a radio parameter indicated from a base station or a terminal including a device being configured.

<System Configuration>

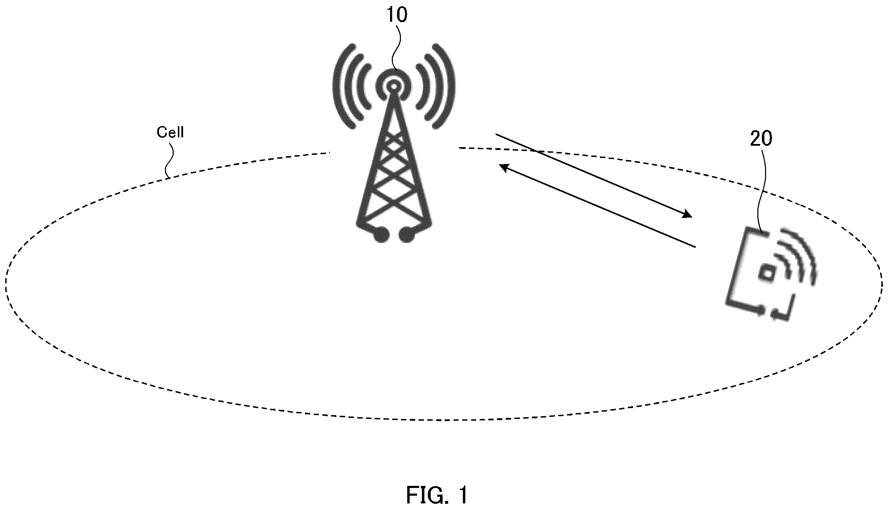

FIG. 1 is a diagram illustrating a configuration example of a radio communication system according to an embodiment. As illustrated in FIG. 1, the radio communication system includes base station 10 and device 20. Although FIG. 1 illustrates one base station 10 and one device 20, this is an example, and there may be a plurality of each. Device 20 may be an Ambient-IoT device.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits a synchronization signal and system information to device 20. Base station 10 transmits a control signal and data to device 20 in downlink (DL). Base station 10 receives a control signal and data from device 20 in uplink (UL).

As will be described later, the radio communication system may include an intermediate node and/or an assisting node (see <Device Type and Topology> below). Hereinafter, "and/or" may be simply described as "/".

<Ambient IoT>

In Rel-18 (Release-18), a study on Ambient-IoT (hereinafter, may be referred to as "A-IoT") that is even lower end than existing narrow band IoT (NB-IoT) (e.g., see section 10 of NPL 4) has been approved (e.g., see NPL 2). In A-IoT, an ultra-low power consumption and ultra-low complexity device is a target.

In A-IoT, for example, the following introduction scenarios and characteristics may be studied for related use cases.

- · Indoor or outdoor environment
- · Base station type, for example, macro/micro/pico cell-based deployment
- · Topology related to connectivity, for example, which node among a base station, a terminal (UE), a relay, a repeater, and the like communicates with the A-IoT device
- · Duplex method is TDD or FDD, and a frequency band is a licensed band or an unlicensed band
- · Coexistence with UE and network equipment in frequency band for existing 3GPP technology
- · Assumption of traffic of outgoing call from device and incoming call to device

For example, the following RAN design targets can be established based on the above-described introduction scenarios and characteristics.

- · Power consumption
- · Complexity
- · Coverage
- · Data rate
- · Positioning accuracy

Based on the introduction scenarios suitable for the related use case, the feasibility of satisfying the design target is compared and evaluated, and a function to be supported is specified.

<Device Type and Topology>

Based on the results of the study item, TR 38.848 (NPL 3) has been approved. In TR 38.848, A-IoT devices of the following categories are studied.

Device A: Device A has no power storage and no function of independent signal generation and signal amplification. Device A performs backscattering transmission.

Device B: Device B has power storage and has no function of independent signal generation. Device B performs backscattering transmission. Device B amplifies a reflected signal by using stored power.

Device C: Device C has power storage and has a function of independent signal generation. That is, device C has an active radio frequency (RF) component for transmission.

It is assumed that the complexity of device A is about radio frequency identification (RFID).

In TR 38.848, Topologies 1 to 4 below are defined in an A-IoT network.

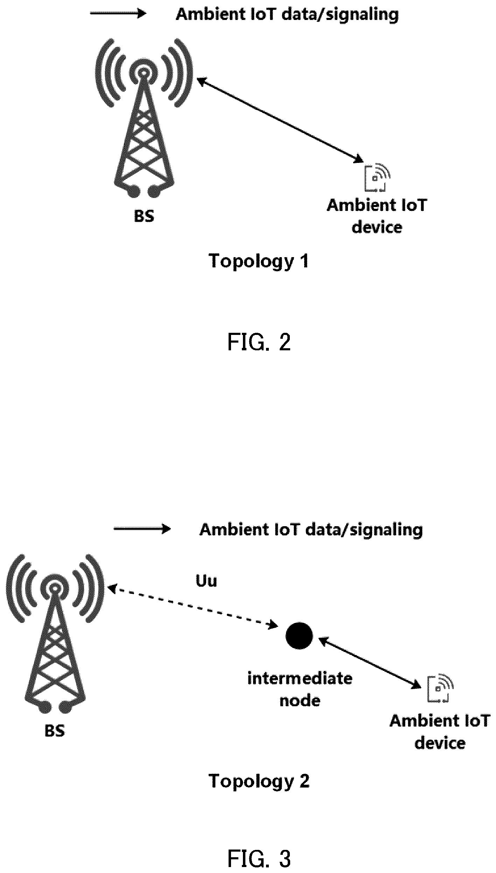

FIG. 2 is a diagram illustrating Topology 1. As illustrated in FIG. 2, Topology 1 is a configuration in which a base station (BS) and an A-IoT device communicate with each other. The A-IoT device directly executes bidirectional communication with the base station.

FIG. 3 is a diagram illustrating Topology 2. As illustrated in FIG. 3, Topology 2 is a configuration in which the base station and the A-IoT device communicate with each other via an intermediate node. The A-IoT device executes bidirectional communication with an intermediate node disposed between the base station and the A-IoT device. The intermediate node may be, for example, a relay, an integrated access and backhaul (IAB) node, a UE, a repeater, or the like.

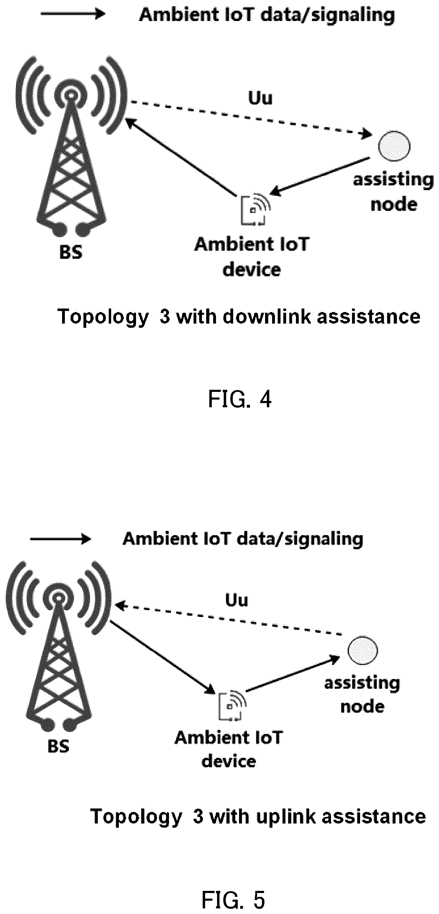

FIG. 4 is a diagram illustrating Topology 3 in DL assistance. As illustrated in FIG. 4, Topology 3 is a configuration including communication between the base station and an assisting node, communication between the assisting node and the A-IoT device, and communication between the A-IoT device and the base station.

The assisting node assists DL communication. For example, as illustrated in FIG. 4, the assisting node receives a DL signal from the base station and transmits the DL signal to the A-IoT device. As for the UL signal, the A-IoT device directly transmits to the base station.

FIG. 5 is a diagram illustrating Topology 3 in UL assistance. As illustrated in FIG. 5, Topology 3 is a configuration including communication between a base station and an assisting node, communication between the assisting node and an A-IoT device, and communication between the A-IoT device and the base station.

The assisting node assists UL communication. For example, as illustrated in FIG. 5, the assisting node receives the UL signal from the A-IoT device and transmits the UL signal to the base station. As for the DL signal, the A-IoT device directly receives from the base station.

The assisting node illustrated in FIGS. 4 and 5 may transmit a carrier wave for causing the A-IoT device to generate backscatter. The assisting node may be, for example, a relay, an IAB node, a UE, a repeater, or the like.

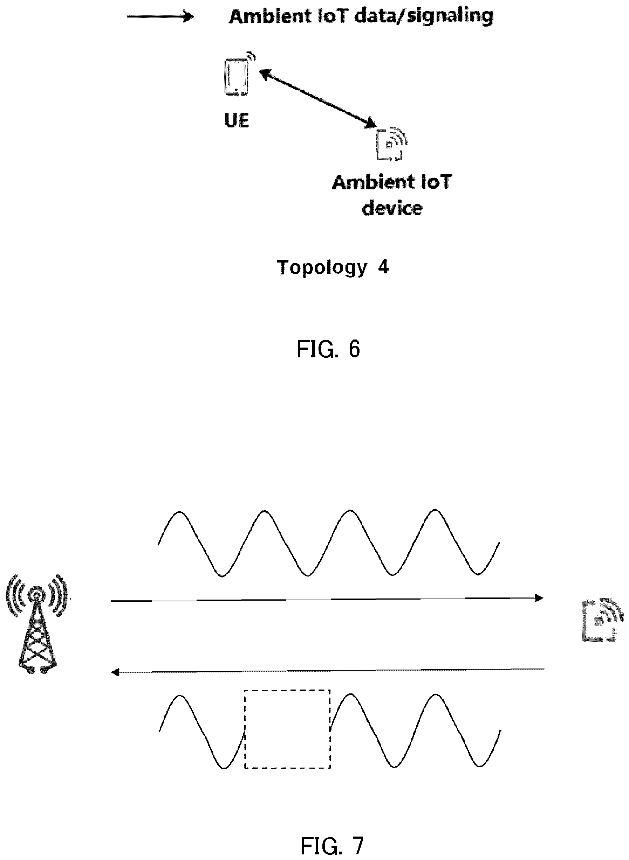

FIG. 6 is a diagram illustrating Topology 4. Topology 4 is a configuration in which a UE and an A-IoT device communicate with each other. The A-IoT device executes bidirectional communication with the UE. Topology 4 can also be regarded as sidelink (SL) communication.

In Topologies 1 to 4, a carrier wave may be provided to an A-IoT device from another node inside or outside the topology (see section 4.2.1 of NPL 3).

<Backscattering Transmission>

The base station, the intermediate node, the assisting node, and another node transmit the RF signal to the A-IoT device. The A-IoT device is activated and obtains power from an RF operating field from the base station, the intermediate node, the assisting node, and another node via inductive coupling.

The A-IoT device backscatters and modulates the RF signal received from the base station, the intermediate node, the assisting node, and another node by switching a reflection coefficient of an antenna of the own device, and transmits information to the base station, the intermediate node, the assisting node, and another node.

FIG. 7 is a diagram illustrating backscattering transmission. FIG. 7 illustrates an example in which the A-IoT device performs On-Off keying to transmit information. A region surrounded by a broken line illustrated in FIG. 7 indicates an OFF interval and may correspond to "0" of the information (bit). A signal of a sine wave may correspond to "1" of the information.

<Random Access in NR>

The terminal executes a random access procedure (RA procedure) to obtain initial access to the network. In NR, two types of RA procedures are supported: a 4-step RA type in which Messages (Msgs) 1 to 4 are exchanged, and a 2-step RA type in which MsgA and MsgB are exchanged.

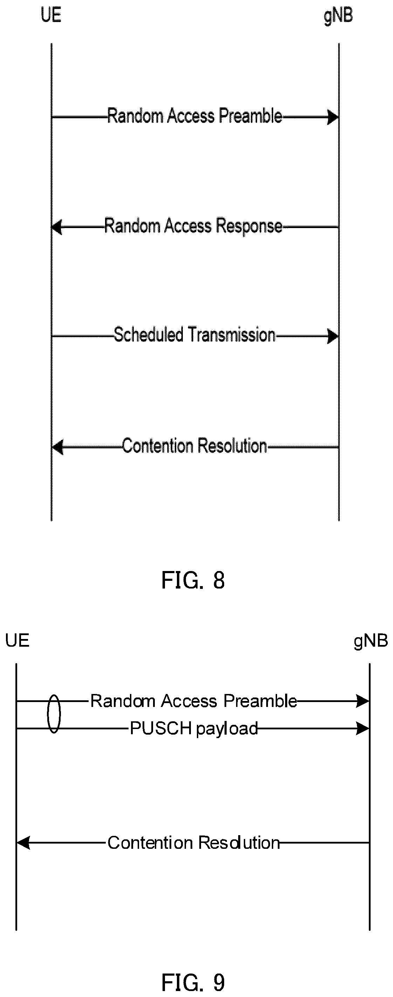

FIG. 8 is a diagram illustrating the 4-step RACH. Step 1: The terminal (UE) transmits an RA preamble (Msg1) to the base station (gNB). Msg1 of the 4-step RA type is configured by a preamble on PRACH.

Step 2: The terminal monitors a response (PDCCH that schedules RAR and RAR (PDSCH)) from the network within a configured window after transmitting Msg1. In a case where the preamble index that matches the preamble index transmitted in Step 1 is included in the RAR (Msg2) of Step 2, the terminal considers that the RAR reception has been successful. RAR is an abbreviation for RA response.

Step 3: The terminal transmits Msg3 (PUSCH) based on the scheduling of the UL grant included in the response of Step 2, and monitors contention resolution (PDCCH that schedules Msg4, and Msg4 (PDSCH)). Msg3 includes a C-RNTI MAC CE or a CCCH SDU including a UE identity (UE ID). The C-RNTI is an abbreviation for Cell-Radio Network Temporary Identifier. The MAC CE is an abbreviation for Media Access Control Address Control Element. The CCCH is an abbreviation for Common Control Channel. The SDU is an abbreviation for Service Data Unit.

Step 4: The terminal considers that the contention resolution has been successful in a case where the C-RNTI MAC CE is transmitted in Msg3 and the PDCCH for the C-RNTI is received. Alternatively, the terminal considers that the contention resolution has been successful in a case where the CCCH SDU is transmitted in Msg3 and the UE contention resolution identity (ID) that matches the transmitted CCCH SDU is included in Msg4. Then, the terminal considers that the RA procedure has been normally completed.

FIG. 9 is a diagram illustrating the 2-step RACH. Step 1: The terminal transmits MsgA. MsgA includes a preamble on PRACH and a payload on PUSCH. MsgA includes a C-RNTI MAC CE or a CCCH SDU including a UE ID. MsgA may be regarded as a combination of Msg1 and Msg3 of the 4-step RACH.

Step 2: The terminal monitors a response (PDCCH that schedules MsgB and MsgB (PDSCH)) from the network within a configured window after transmitting MsgA. The terminal considers that the RA procedure has been normally completed in a case where the C-RNTI MAC CE is transmitted in MsgA and PDCCH for the C-RNTI is received. In other cases, the terminal considers that the RA procedure has been normally completed in a case where the CCCH SDU is transmitted in MsgA and the UE contention resolution ID that matches the transmitted CCCH SDU is included in MsgB.

<Random Access in NB-IoT>

The RA procedure of the NB-IoT is the same as the 4-step RACH of the NR. Step 1: The terminal (UE) of the NB-IoT transmits an RA preamble (Msg1) to the base station (gNB). Msg1 is configured by a preamble on NPRACH. NPRACH is an abbreviation for Narrowband PRACH.

Step 2: The terminal monitors a response (NPDCCH that schedules RAR and RAR (NPDSCH)) from the network within a configured window after transmitting Msg1. In a case where the preamble index that matches the preamble index transmitted in Step 1 is included in the RAR (Msg2) of Step 2, the terminal considers that the RAR reception has been successful. NPDCCH is an abbreviation for Narrowband PDCCH. NPDSCH is an abbreviation for Narrowband PDSCH.

Step 3: The terminal transmits Msg3 (NPUSCH) based on the scheduling of the UL grant included in the response of Step 2, and monitors contention resolution (NPDCCH that schedules Msg4 and Msg4 (NPDSCH)). Msg3 includes a C-RNTI MAC CE or a CCCH SDU including a UE ID. NPUSCH is an abbreviation for Narrowband PUSCH. C-RNTI is an abbreviation for Cell-Radio Network Temporary Identifier. MAC CE is an abbreviation for Media Access Control Address Control Element. CCCH is an abbreviation for Common Control Channel. SDU is an abbreviation for Service Data Unit.

Step 4: The terminal considers that the contention resolution has been successful in a case where the C-RNTI MAC CE is transmitted in Msg3 and the NPDCCH for the C-RNTI is received. Alternatively, the terminal considers that the contention resolution has been successful in a case where the CCCH SDU is transmitted in Msg3 and the UE contention resolution identity (ID) that matches the transmitted CCCH SDU is included in Msg4. Then, the terminal considers that the RA procedure has been normally completed.

<Preamble Transmission in NR>

For the preamble transmission in NR, the preamble signal is generated as follows (see NPL 5). The expression (1) is a cyclically shifted Zadoff Chu sequence.
[Expression 1]

$$x_{u,v}(n) = x_u\left((n + C_v) \bmod L_{RA}\right) \qquad (1)$$

$$x_u(i) = e^{-j\frac{\pi u i(i+1)}{L_{RA}}}, i = 0,1,\ldots,L_{RA} - 1$$

The expression (2) indicates a frequency domain representation of the preamble. x included in the right side of the expression (2) is indicated by the expression (1).
[Expression 2]

$$y_{u,v}(n) = \sum_{m=0}^{L_{RA}-1} x_{u,v}(m) \cdot e^{-j\frac{2\pi mn}{L_{RA}}} \qquad (2)$$

The expression (3) indicates a preamble sequence mapped to a frequency domain resource. y included in the right side of the expression (3) is indicated by the expression (2).
[Expression 3]

$$a_k^{(p,RA)} = \beta_{PRACH} y_{u,v}(k) \qquad (3)$$

$$k = 0,1,\ldots,L_{RA} - 1$$

OFDM is used for the baseband signal generation, and the time-continuous signal of PRACH is indicated by the following expression (4). "a" included in the right side of the expression (4) is indicated by the expression (3).
[Expression 4]

$$s_l^{(p,\mu)}(t) = \sum_{k=0}^{L_{RA}-1} a_k^{(p,RA)} e^{j2\pi(k+Kk_1+\bar{k})\Delta f_{RA}(t-N_{CP,l}^{RA}T_c-t_{start}^{RA})} \qquad (4)$$

<Preamble Transmission in NB-IoT>

The preamble transmission in the NB-IoT is different from the NR (see NPL 4). The preamble transmission of the NB-IoT is based on single-subcarrier frequency-hopping symbol groups.
The generation of a baseband signal is based on a single subcarrier. The time-continuous signal of the symbol group "i" is indicated by the following expression (5).
[Expression 5]

$$s_i(t) = \beta_{NPRACH} e^{j2\pi(n_{SC}^{RA}(i)+Kk_0+1/2)\Delta f_{RA}(t-T_{CP})} \qquad (5)$$

The first term in the right parentheses of "$e^{j2\pi}$" on the right side of the expression (5) is indicated by the following expressions (6-1) to (6-3). where $\bar{n}_{SC}^{RA}(0) = n_{init} \bmod N_{sc}^{RA}$ with $n_{init}$ being the subcarrier selected by the MAC layer from $\{0,1,\ldots, N_{sc}^{NPRACH} - 1\}$, and the pseudo random sequence $c(n)$ is given by clause 7.2. The pseudo random sequence generator shall be initialised with $c_{init} = N_{ID}^{Ncell}$.

[Expression 6]

$$n_{sc}^{RA}(i) = n_{start} + \widetilde{n}_{SC}^{RA}(i) \qquad (6-1)$$

$$n_{start} = N_{scoffset}^{NPRACH} + \left\lfloor n_{init} / N_{sc}^{RA} \right\rfloor \cdot N_{sc}^{RA} \qquad (6-2)$$

$$\widetilde{n}_{sc}^{RA}(i) = \begin{cases} \left(\widetilde{n}_{sc}^{RA}(0) + f(i/4)\right) \bmod N_{sc}^{RA} & i \bmod 4 = 0 \text{ and } i > 0 \\ \widetilde{n}_{sc}^{RA}(i-1) + 1 & i \bmod 4 = 1,3 \text{ and } \widetilde{n}_{sc}^{RA}(i-1) \bmod 2 = 0 \\ \widetilde{n}_{sc}^{RA}(i-1) - 1 & i \bmod 4 = 1,3 \text{ and } \widetilde{n}_{sc}^{RA}(i-1) \bmod 2 = 1 \\ \widetilde{n}_{sc}^{RA}(i-1) + 6 & i \bmod 4 = 2 \text{ and } \widetilde{n}_{sc}^{RA}(i-1) < 6 \\ \widetilde{n}_{sc}^{RA}(i-1) - 6 & i \bmod 4 = 2 \text{ and } \widetilde{n}_{sc}^{RA}(i-1) \geq 6 \end{cases} \qquad (6-3)$$

$$f(t) = \left( f(t-1) + \left( \sum_{n=10t+1}^{10t+9} c(n)2^{n-(10t+1)} \right) \bmod \left( N_{sc}^{RA} - 1 \right) + 1 \right) \bmod N_{sc}^{RA}$$

$$f(-1) = 0$$

"$n_{start}$" of the first term on the right side of the expression (6-1) is indicated by the expression (6-2). The first term on the right side of the expression (6-2) indicates an offset of a frequency position of the preamble. "$n_{init}$" included in the second term on the right side of the expression (6-2) indicates the subcarrier selected by the terminal in the MAC layer.

The subcarrier index in the NB-IoT is considered as a preamble index in the RACH procedure of a normal UE (e.g., an existing UE other than A-IoT). The frequency hopping is executed across the symbol groups. The second term on the right side of the expression (6-1) is indicated by the expression (6-3). The expression (6-3) indicates the frequency hopping, and an example of the symbol group of P = 4 is illustrated.

<NPRACH Configuration>

The NPRACH configuration for the NB-IoT preamble transmission is provided by a higher layer.

· Time domain resource

The NPRACH resource is periodic. The period is provided by the higher layer. Further, the NPRACH starting time is provided by the higher layer.

· Frequency domain resource

The number of candidate subcarriers for NPRACH is provided by the higher layer. The location of the first candidate subcarrier is provided by the higher layer.

<Analysis>

The A-IoT targets an IoT technology that relies on an ultra-low power consumption and ultra-low complexity device for a very low-end IoT application.

Therefore, it is expected that the A-IoT device has lower complexity and power consumption and a lower data rate than the NB-IoT. Further, it is expected that the A-IoT also depends on narrowband transmission as in the NB-IoT.

There is no specific consideration on how to handle the initial access such as RA for the A-IoT device as described above. For this reason, the A-IoT device cannot appropriately start communication.

In this respect, in the present disclosure, the following proposals are provided for the handling of the initial access such as RA in the A-IoT.

Further, in the present disclosure, the following proposals are provided for the techniques of RA for conforming to the above-described features of the A-IoT.

The following proposals may be applied to the ambient A-IoT device of a specific device type (device A/B/C) or may be applied to the ambient A-IoT device of all device types. Further, different solutions may be applied to different device types. Hereinafter, an ambient IoT may be referred to as an A-IoT.

<Proposal 1>

Proposal 1 relates to the RA procedure in an A-IoT.For the initial access of the A-IoT, the 4-step RA procedure, 2-step RA procedure or both the 4-step and 2-step RA procedures may be used.

<Proposal 1: Introduction of New Parameter>

A new parameter is introduced for the RACH configuration of the A-IoT. Since the A-IoT has ultra-low complexity and narrowband (e.g., the bandwidth is several subcarriers and may be less than a physical resource block (PRB)), some of the PRACH/NPRACH configurations of the NR or the NB-IoT may not be supported in the A-IoT.

A subset of the parameters of the PRACH configuration of the NR or the NPRACH configuration of the NB-IoT may be provided to the A-IoT.Alternatively, a subset of the PRACH configuration index in the PRACH configuration of the NR may be provided to the A-IoT. The PRACH configuration of the A-IoT will be described in <Proposal 2> and <Proposal 3>.

<Proposal 1: 4-Step RA Procedure>

Step 1 (Msg1): The A-IoT device transmits a preamble. The preamble (Msg1) may be configured by a preamble on PRACH newly introduced (e.g., <Proposal 2> and <Proposal 3>).

Step 2 (Msg2): The A-IoT device monitors a response from the network node within a time window. The A-IoT device receives the response and considers that the response reception has been successful in a case where the received response includes a preamble index that matches the preamble transmission of Step 1. The response may additionally include a time/frequency resource used for the A-IoT device for transmission in Step 3.

Step 3 (Msg3): The A-IoT device transmits an identity (ID) of the A-IoT device. The ID of the A-IoT device may be a C-RNTI MAC CE or a CCCH SDU including a device ID (A-IoT ID).

Step 4 (Msg4): The A-IoT device monitors contention resolution information from the network node within a time window. In a case where the contention resolution information is addressed to the ID or the contention resolution information includes the ID transmitted by the A-IoT device in Step 3 (Msg3), the A-IoT device considers that the contention resolution has been successful, and the RA procedure has been successful.

<Proposal 1: 2-Step RA Procedure>

Step A (MsgA): The A-IoT device transmits a preamble and an ID of the A-IoT device. The preamble may be configured by a preamble on PRACH newly introduced (e.g., <Proposal 2> and <Proposal 3>).

Step B (MsgB): The A-IoT device monitors contention resolution information from the network node within a time window. In a case where the contention resolution information is addressed to the ID or the contention resolution information includes the ID transmitted by the A-IoT device in Step 1 (MsgA), the A-IoT device considers that the contention resolution has been successful, and the RA procedure has been successful.

<Proposal 1: 2-Step RA procedure: fallback instruction>

In Step B, the A-IoT device may receive a fallback instruction from the network node. For example, in a case where the received response (MsgB) includes a preamble index that matches the preamble transmission in Step A, the A-IoT device may consider that the response has been normally received and execute Steps 3 and 4 of the 4-step RA procedure.

<Proposal 1: Time Window>

A period of the time window in Msg2/Msg4/MsgB of the RA procedure may be provided (configured) in DL information from the network node or may be fixed by the specification. The DL information may be, for example, information of higher layer signaling such as a master information block (MIB), a system information block (SIB), downlink control information (DCI), a MAC CE, or an RRC. The term "fixed" may be replaced with regulated or defined.

<Proposal 1: Network Node>

Unless otherwise specified, the network node in Proposal 1 and the following proposals may be a base station, an intermediate node, an assisting node, a relay, and a terminal (UE of Topology 4) (e.g., see <Ambient IoT> and <Device Type and Topology>).

<Proposal 1: Summary>

With the above-described configuration, the A-IoT device can appropriately execute communication. Further, the RA procedure conforming to the features of the A-IoT such as ultra-low power consumption and ultra-low complexity is provided.

<Proposal 2>

Proposal 2 relates to the preamble transmission of an A-IoT. A new channel such as AIoT-PRACH is defined for the preamble transmission of the A-IoT.
In the preamble transmission of the A-IoT in Step 1/Step A described in Proposal 1, single subcarrier based signal generation is used.
Regarding the frequency domain resource for the preamble transmission of the A-IoT, Options 1 to 4 below are provided.

<Proposal 2: Option 1>

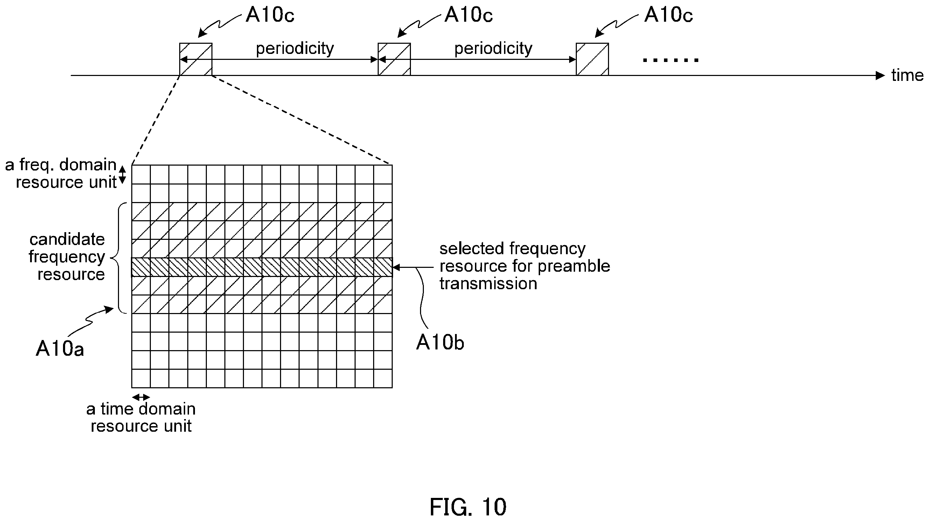

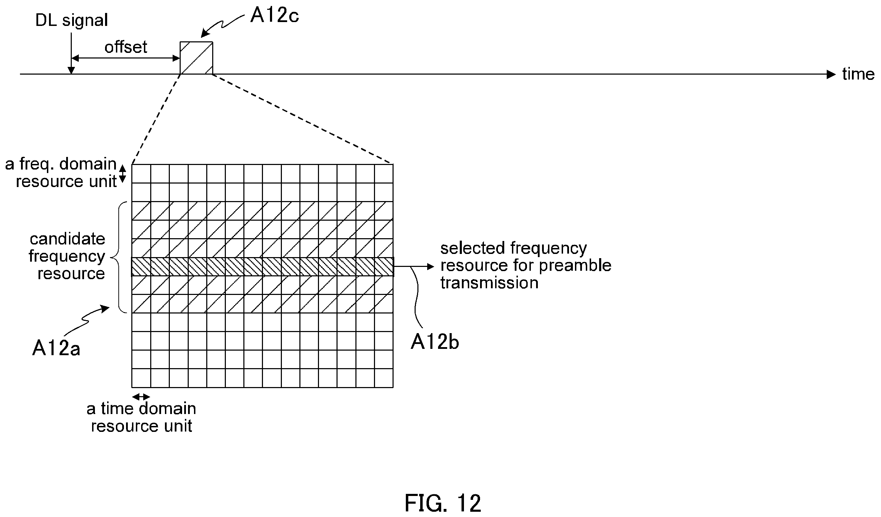

The subcarrier used for the preamble transmission is selected from a plurality of candidate subcarriers.
The bandwidth assigned to the AIoT-PRACH may be the entire UL bandwidth or a part of the UL bandwidth. The bandwidth may be pre-defined/configured.
The subcarrier used for the preamble transmission is represented by, for example, "N_offset + N_selected".
"N_offset" indicates a start position of the candidate subcarrier from a reference subcarrier such as a subcarrier of an index 0. That is, "N_offset" indicates a first position of the candidate subcarrier.
For example, "candidate frequency resource" illustrated in FIG. 10 indicates candidate subcarriers. The subcarriers (frequency domain resource units in FIG. 10) indicated by arrow A10a in FIG. 10 indicates the first position of the candidate subcarriers.
For example, "candidate frequency resource" illustrated in FIG. 12 indicates the candidate subcarriers. The subcarriers (frequency domain resource units in FIG. 12) indicated by arrow A12a in FIG. 12 indicates the first position of the candidate subcarriers.
A new parameter for providing "N_offset" is introduced. The parameter may be provided by, for example, the DL information. The parameter may be fixed by the specification in order to reduce the DL information.
"N_selected" indicates a position of the subcarrier used for the preamble transmission from the first position of the candidate subcarrier. For example, the A-IoT device selects "N_selected" within a range of the number of candidate subcarriers. The A-IoT device may randomly select "N_selected".
For example, the number of candidate subcarriers (candidate frequency resource) illustrated in FIG. 10 is 6. The A-IoT device selects, for example, a value of "N_selected" from a range of 0 to 5 (or 1 to 6) of the number of candidate subcarriers. In the example of FIG. 10, the A-IoT device selects "2" (or "3") as "N_selected", and the subcarrier used for the preamble transmission is the subcarrier indicated by arrow A10b in FIG. 10.
For example, the number of candidate subcarriers (candidate frequency resource) illustrated in FIG. 12 is 6. The A-IoT device selects, for example, a value of "N_selected" from a range of 0 to 5 (or 1 to 6) of the number of candidate subcarriers. In the example of FIG. 12, the A-IoT device selects "2" (or "3") as "N_selected", and the subcarrier used for the preamble transmission is the subcarrier indicated by arrow A12b in FIG. 12.
Regarding the number of candidate subcarriers, the following Alt. 1 to Alt. 3 are provided.

<Proposal 2: Option 1: Alt. 1>

A new parameter for providing the number of candidate subcarriers is introduced. The new parameter indicating the number of candidate subcarriers may be provided by the DL information.

<Proposal 2: Option 1: Alt. 2>

The number of candidate subcarriers is fixed by the specification. In a case of being fixed by the specification, the DL information is reduced, and the power consumption of the A-IoT device can be reduced.

<Proposal 2: Option 1: Alt. 3>

The number of candidate subcarriers is configured to be smaller than the number of subcarriers of the NB-IoT. The number of subcarriers of the NB-IoT is 12, 24, 36, or 48.

<Proposal 2: Option 2>

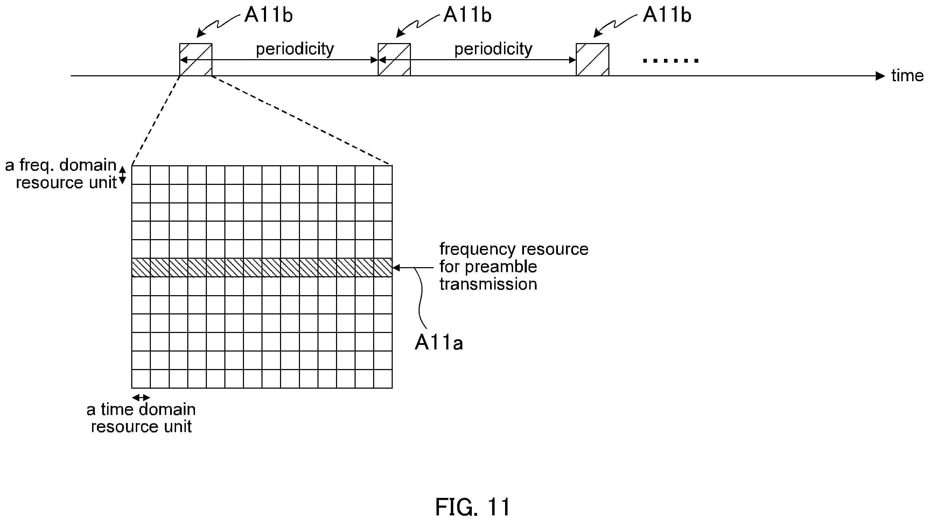

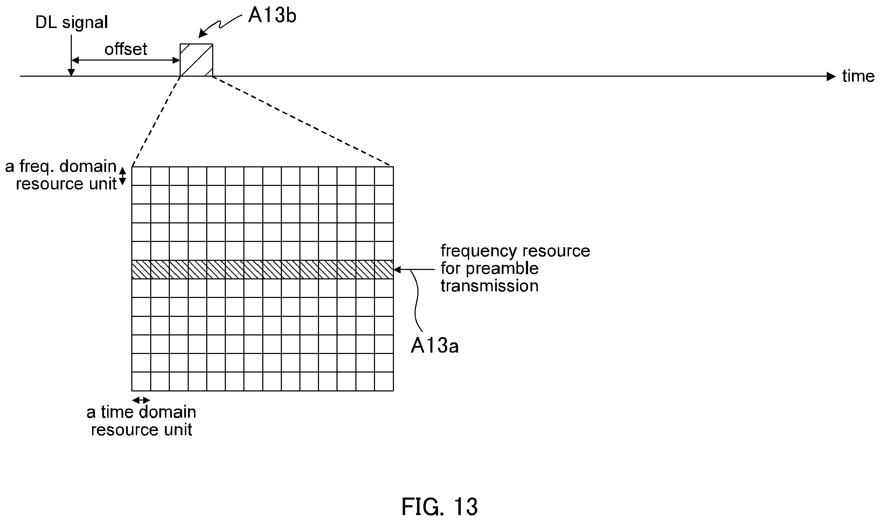

One subcarrier is assigned for the preamble transmission of the A-IoT. For example, as illustrated by arrow A11a in FIG. 11, one subcarrier (frequency domain resource unit in FIG. 11) is allocated. For example, as illustrated by arrow A13a in FIG. 13, one subcarrier (frequency domain resource unit in FIG. 13) is allocated.
A new parameter is introduced to provide the frequency location of the preamble transmission. The new parameter is provided from the network node to the A-IoT device by DL information.
In the A-IoT, a narrowband is assumed. By allocating one subcarrier for the preamble transmission of the A-IoT, the features of the A-IoT can be satisfied.

<Proposal 2: Option 3>

The frequency hopping is supported for the preamble transmission of the A-IoT. That is, the preamble of the A-IoT is transmitted in a plurality of time units. Different subcarriers are used in different time units and are determined based on a frequency hopping rule. The time unit may be, for example, a symbol, a slot, a subframe, or a radio frame.
The number of times of frequency hopping is configured to be smaller than the number of times of frequency hopping of the NB-IoT. For example, in the preamble transmission of the A-IoT, a maximum of two times of frequency hopping may be supported. The number of times of frequency hopping in the NB-IoT is 4 or 6.
A new parameter indicating whether the frequency hopping is enabled is introduced. Further, a new parameter indicating the number of times of frequency hopping is introduced. The new parameter is provided from the network node to the A-IoT device by the DL information.

<Proposal 2: Option 4>

The frequency hopping is not supported in the A-IoT. That is, the A-IoT device does not perform frequency hopping for the preamble transmission. In this case, the complexity of the A-IoT device can be reduced.

<Proposal 2: Summary>

With the above-described configuration, the A-IoT device can appropriately execute communication. Further, the preamble transmission conforming to the features of the A-IoT such as ultra-low power consumption and ultra-low complexity is provided.

<Proposal 3>

Proposal 3 relates to a time domain resource in the preamble transmission of the A-IoT. Regarding the time domain resource in the preamble transmission of the A-IoT, the following Options 1 and 2 are provided.

<Proposal 3: Option 1>

The time domain resource for the preamble transmission of the A-IoT is periodic. For example, as illustrated by arrow A10c in FIG. 10, the time domain resource for the preamble transmission of the A-IoT is periodic. For example, as illustrated by arrow A11b in FIG. 11, the time domain resource for the preamble transmission of the A-IoT is periodic.
Regarding the time domain resource for the preamble transmission of the A-IoT, the following Alt. 1 to Alt. 3 are provided.

<Proposal 3: Option 1: Alt. 1>

A new parameter is introduced to provide the periodicity and the start time of the A-IoT preamble transmission. The new parameter may be provided by the DL information.

<Proposal 3: Option 1: Alt. 2>

The periodicity and the start time of the A-IoT preamble transmission are fixed by the specification. In a case of being fixed by the specification, the DL information is reduced, and the power consumption of the A-IoT device can be reduced.

As a baseline option, the candidate time resource for the preamble transmission is one in one period. After the RA procedure is triggered, the A-IoT device determines the next available time domain resource for the preamble transmission. In the next Proposal 4, some function enhancements are discussed.

<Proposal 3: Option 2>

The time domain resource for the A-IoT preamble transmission is one-shot. For example, as illustrated by arrow A12c in FIG. 12, the time domain resource for the A-IoT preamble transmission is one-shot. For example, as illustrated by arrow A13b in FIG. 13, the time domain resource for the A-IoT preamble transmission is one-shot.

In consideration of several use cases in which the A-IoT device does not have UE-initiated data transmission, the periodic resource for the preamble transmission may not be necessary for the A-IoT device. In particular, in a case of the device type A/B, the A-IoT device cannot execute the UL transmission without a DL trigger. That is, in a case where the UL transmission is triggered in DL, it is assumed that the time domain resource for the A-IoT preamble transmission is effective even in one-shot.

<Proposal 3: Option 3>

The A-IoT determines the time resource used for the preamble transmission based on an offset with respect to the DL signal from the network node. In other words, the A-IoT determines a transmission timing of the preamble based on an offset time from the reception of the DL signal. The offset may be designated by a symbol/slot/subframe/radio frame. Regarding the offset and the DL signal, the following Alt. 1 to Alt. 3 are provided.

<Proposal 3: Option 3: Alt. 1>

A new parameter is introduced to provide the offset. The new parameter may be provided by the DL information.

<Proposal 3: Option 3: Alt. 2>

The offset is fixed by the specification. In a case of being fixed by the specification, the DL information is reduced, and the power consumption of the A-IoT device can be reduced.

<Proposal 3: Option 3: Alt. 3>

The DL signal may be a signal that transports essential information for the A-IoT preamble transmission. The DL signal that transports the essential information may be, for example, MIB or SIB.

The DL signal may be a signal that triggers the A-IoT preamble transmission. The trigger signal may be, for example, PDCCH or PDSCH. PDCCH or PDSCH may be a channel newly defined for the A-IoT, such as APDCCH or APDSCH.

The DL signal may be cell-specific instead of being UE-specific (A-IoT device-specific).

<Proposal 3: Summary>

With the above-described configuration, the A-IoT device can appropriately execute communication. Further, the preamble transmission conforming to the features of the A-IoT such as ultra-low power consumption and ultra-low complexity is provided.

<Proposal 4>

For example, in consideration of several use cases of the A-IoT, such as information collection of stock, a large number of A-IoT devices may be simultaneously triggered by using RACH. Proposal 4 relates to a reduction in possibility of a collision of the initial access, such as RA. Regarding the reduction of the collision of RA, the following Options 1 to 4 are provided.

<Proposal 4: Option 1>

For the preamble transmission, a plurality of candidate time resources for the A-IoT device to randomly select one time resource are provided. In other words, the A-IoT device randomly selects one time resource from the plurality of candidate time resources for the preamble transmission.
In a case where the time resource (time domain resource) is periodic, the following Sub-Options 1-1 to 1-5 are provided.

<Proposal 4: Option 1: Sub-Option 1-1>

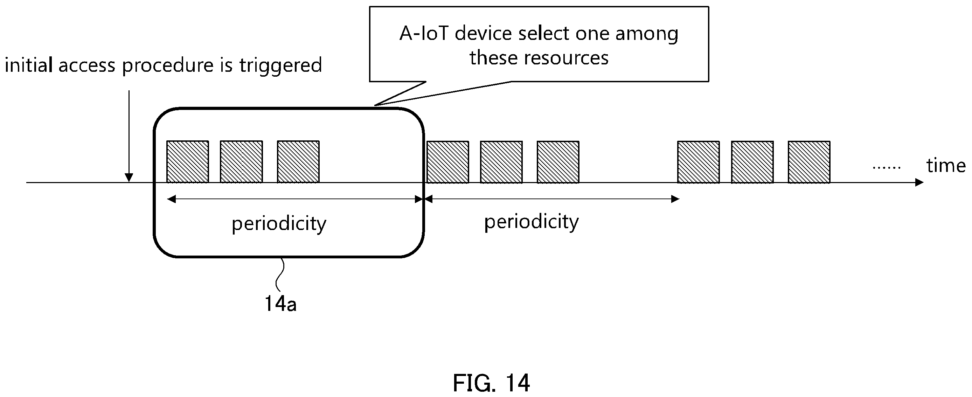

In a case where the time domain resource is periodic, a plurality of time domain resource candidates is present in one period. In other words, a plurality of time domain resource candidates periodically exists. After the RA procedure is triggered, the A-IoT device randomly selects one time domain resource from the next available period.
For example, as illustrated in FIG. 14, three time domain resource candidates periodically exist. After the RA procedure (initial access procedure) is triggered, the A-IoT device randomly selects one time domain resource from the plurality of time domain resource the candidates (three time domain resource candidates) in the next available period as illustrated in frame 14a.

<Proposal 4: Option 1: Sub-option 1-2>

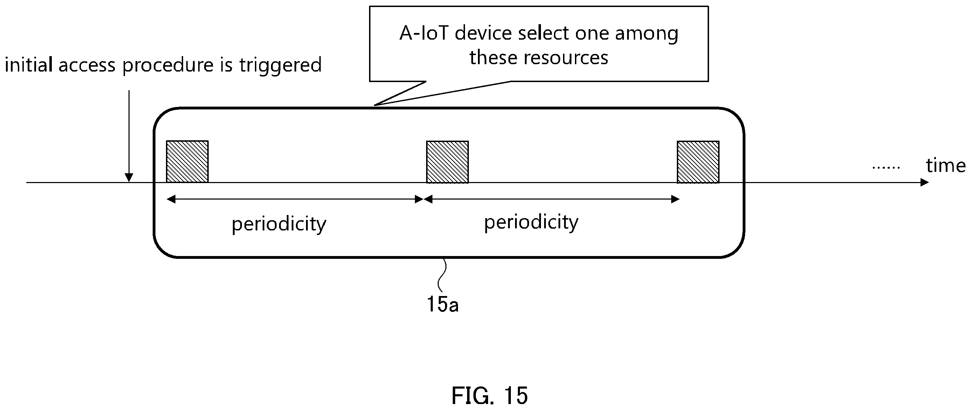

In a case where the time domain resource is periodic, one time domain resource candidate is present in one period, and the A-IoT device selects a time domain resource from a plurality of periods. In other words, one time domain resource candidate periodically exists, and the A-IoT device randomly selects one time domain resource from the plurality (predetermined number) of time domain resource candidates following the next available period after the RA procedure is triggered.
For example, as illustrated in FIG. 15, one time domain resource candidate periodically exists. After the RA procedure is triggered, the A-IoT device randomly selects one time domain resource from the three time domain resource candidates following the next available period as illustrated in frame 15a.

<Proposal 4: Option 1: Sub-Option 1-3>

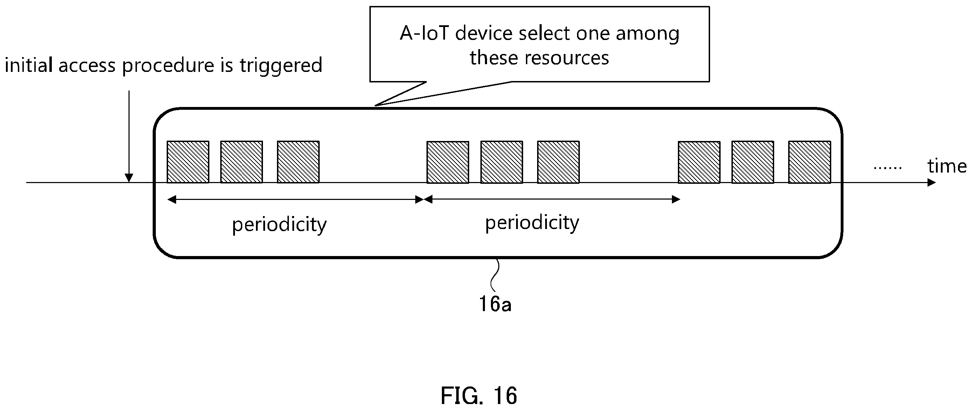

Sub-Option 1-3 is a combination of Sub- Option 1-1 and Sub- Option 1-2.
In a case where the time domain resource is periodic, a plurality of time domain resource candidates is present in one period, and the A-IoT device selects the time domain resource from a plurality of periods. In other words, the plurality of time domain resource candidates periodically exists, and the A-IoT device randomly selects one time domain resource from the plurality of time domain resource candidates in the plurality (N) of periods following the next available period after the RA procedure is triggered.
For example, as illustrated in FIG. 16, the plurality of time domain resource candidates periodically exists. After the RA procedure is triggered, the A-IoT device randomly selects one time domain resource from the nine time domain resource candidates in the three periods following the next available period as illustrated in frame 16a.

<Proposal 4: Option 1: Sub-Option 1-4>

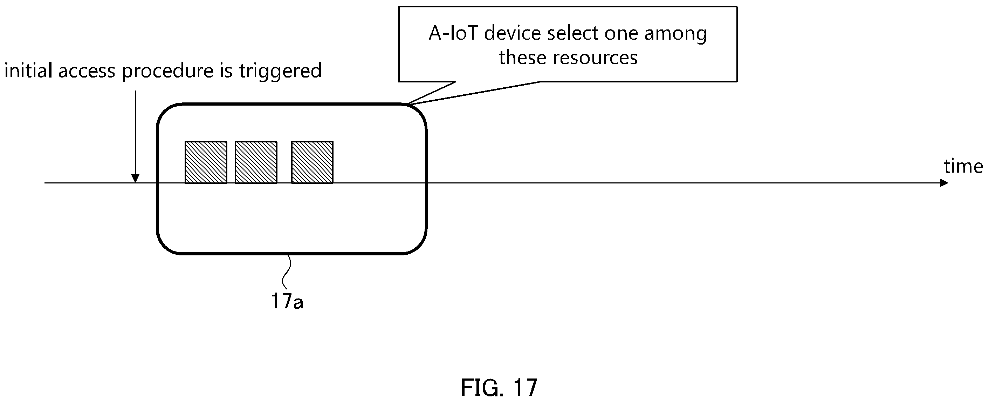

In a case where the time domain resource is not periodic, a plurality of time domain resource candidates is present in one period (interval), and the A-IoT device selects the time domain resource from one period that is not periodic. In other words, the A-IoT device selects the time domain resource from the plurality of time domain resources of the one-shot.
For example, as illustrated in FIG. 17, the plurality of time domain resource candidates is present in one period that is not periodic. After the RA procedure is triggered, the A-IoT device randomly selects one time domain resource from the three time domain resource candidates in the next available period as illustrated in frame 17a. In a case where the UL transmission is triggered in the DL, it is assumed to be effective even in the plurality of time domain resource candidates of the one-shot.

<Proposal 4: Option 1: Sub-Option 1-5>

The period described in Sub-Options 1-1 to 1-3 may be provided by the DL information or may be fixed in the specification. The number of the plurality of time domain resources in one period may be provided by the DL information or may be fixed by the specification.

The start position of the time domain resource in each period may be provided by the DL information or may be fixed by the specification. The start position may be designated by a symbol/slot/subframe/radio frame.

The interval between the plurality of time domain resources in each period may be provided by the DL information or may be fixed by the specification. The interval may be designated by a symbol/slot/subframe/radio frame.

<Proposal 4: Option 2>

In a case where the RA procedure is triggered, the A-IoT device generates a random number as an initial value of a counter. The A-IoT device transmits the preamble after the value of the counter is equal to 0. After the value of the counter is equal to 0, the A-IoT device determines the next available time resource. The range of the random number may be provided by the DL information from the network node or may be fixed by the specification.

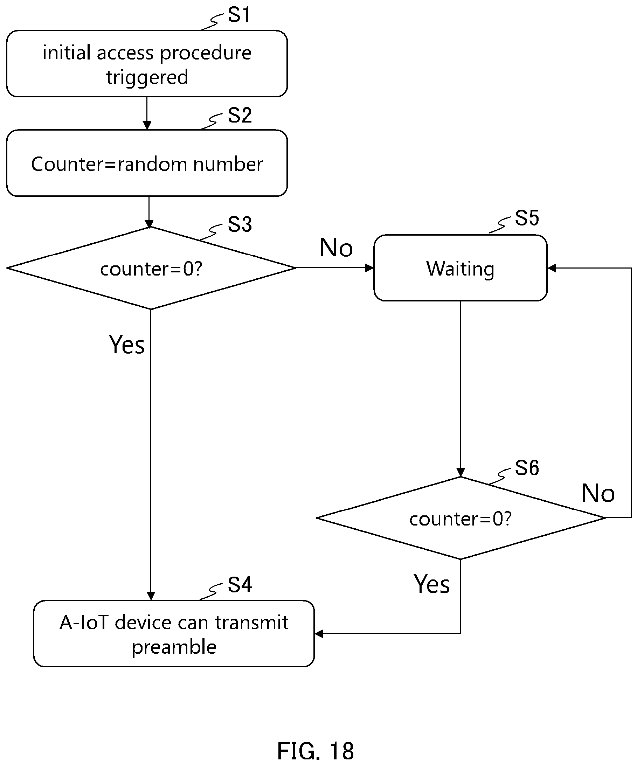

FIG. 18 is a flowchart illustrating an operation example of Option 2 of Proposal 4. The A-IoT device triggers the RA procedure (initial access procedure) (S1). The A-IoT device sets the random number in the counter (S2). The A-IoT device determines whether the value of the counter is 0 (S3).

In a case where the value of the counter is 0 (S3: "Yes"), the A-IoT device transmits the preamble (S4).

In a case where the value of the counter is not 0 (S3: "No"), the A-IoT device waits for a certain time (S5).

The A-IoT device determines whether or not the value of the counter is 0 (S6).

In a case where the value of the counter is not 0 (S6: "No"), the A-IoT device transitions the process to S5 and waits for a certain time (S4).

In a case where the value of the counter is 0 (S6: "Yes"), the A-IoT device transitions the process to S4 and transmits the preamble (S4).

The A-IoT device may transmit the preamble in a case where the value of the counter is counted from 0 and the generated random number is obtained.

Further, the A-IoT device may down-count or up-count the value of the counter in synchronization with the transmission opportunity of the preamble. For example, the A-IoT device may down-count or up-count the value of the counter at the timing of the hatched rectangle illustrated in FIGS. 14 to 17.

<Proposal 4: Option 3>

In a case where the RA procedure is triggered, the A-IoT device generates a timer having a random period. The A-IoT device transmits the preamble after the timer of the random period expires. After the timer expires, the A-IoT device determines the next available time resource. The range of the random period of the timer may be provided by the DL information from the network node or may be fixed by the specification.

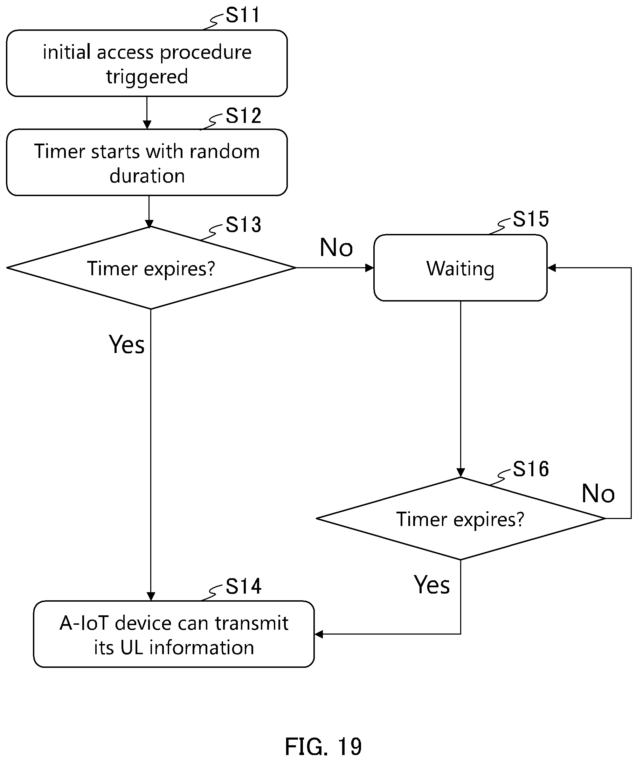

FIG. 19 is a flowchart illustrating an operation example of Option 3 of Proposal 4. The A-IoT device triggers the RA procedure (initial access procedure) (S11). The A-IoT device starts the timer having a random period (S12). The A-IoT device determines whether the timer expires (S13).

In a case where the timer expires (S13: "Yes"), the A-IoT device transmits the preamble (S14).

In a case where the timer does not expire (S13: "No"), the A-IoT device waits for a certain time (S15).

The A-IoT device determines whether the timer expires (S16).

In a case where the timer does not expire (S16: "No"), the A-IoT device transitions the process to S15 and waits for a certain time (S15).

In a case where the timer expires (S16: "Yes"), the A-IoT device transitions the process to S14 and transmits the preamble (S14).

The A-IoT device may transmit the preamble in a case where the value of the timer starts from 0 and becomes the random period.

Further, the A-IoT device may down-count or up-count the value of the timer in synchronization with the transmission opportunity of the preamble. For example, the A-IoT device may down-count or up-count the value of the timer at the timing of the hatched rectangle illustrated in FIGS. 14 to 17.

<Proposal 4: Option 4>

In the preamble transmission, the sequence is transported such that the A-IoT device can recognize the collision of RA in Step 2 or Step B of the RA procedure for collision handling. In other words, the A-IoT device transmits the sequence in Step 1 or Step A of the RA procedure. Regarding the transmission of the sequence, the following Sub-Option 4-1 and Sub-Option 4-2 are provided.

<Proposal 4: Option 4: Sub-Option 4-1>

The A-IoT device randomly selects a sequence from one set of candidate sequences. One set of the sequences may be provided by the DL information or may be fixed by the specification.

<Proposal 4: Option 4: Sub-option 4-2>

The A-IoT device generates a sequence based on the ID of the A-IoT device or a part of the ID of the A-IoT device.

<Proposal 4: Summary>

With the above-described configuration, the A-IoT device can appropriately execute communication. Further, the preamble transmission conforming to the features of the A-IoT such as ultra-low power consumption and ultra-low complexity is provided.

<Proposal 5>

Proposal 5 relates to a preamble format of the A-IoT. The preamble format of the A-IoT may be defined by the following parameters or a part of the following parameters.

· Sequence length
· CP length
· SCS
· Length of time domain resource occupied in preamble transmission

The preamble format of the NB-IoT or a part of the preamble format of the NB-IoT may be reused in the A-IoT.
Regarding the preamble format of the A-IoT, the following Options 1 and 2 are provided.

<Proposal 5: Option 1>

A plurality of preamble formats is defined for the A-IoT preamble transmission. The preamble format used for the A-IoT transmission is provided from the network node to the A-IoT by the DL information.

<Proposal 5: Option 2>

One preamble format is supported for the A-IoT preamble transmission and is fixed by the specification.

<Proposal 5: Summary>

With the above-described configuration, the A-IoT device can appropriately execute communication. Further, the preamble transmission conforming to the features of the A-IoT such as ultra-low power consumption and ultra-low complexity is provided.

<Proposal 6>

According to various solutions of the above-described proposals related to the preamble transmission, information included in Step 2 or Step B of the RA procedure may be different. Proposal 6 relates to information included in Step 2 or Step B of the RA procedure. In Proposal 6, the following Options 1 to 3 are provided.

<Proposal 6: Option 1>

The "preamble index" included in Step 2 refers to the "subcarrier index". In a case where the "subcarrier index" included in the response (DL information) received in Step 2 matches the subcarrier index selected by the A-IoT device for the preamble transmission in Step 1, the A-IoT device considers that the response has been normally received.
The "preamble index" included in Step B refers to the "subcarrier index". In a case where the "subcarrier index" included in the response (DL information) received in Step B matches the subcarrier index selected by the A-IoT device for the preamble transmission in Step A, the A-IoT device considers that the response has been normally received.

<Proposal 6: Option 2>

The "preamble index" included in Step 2 refers to a "time-frequency resource index" or a "subcarrier index and time domain resource index". In a case where the "time-frequency resource index" or the "subcarrier index and time domain resource index" included in the response received in Step 2 matches the subcarrier index and the time domain resource index selected by the A-IoT device for the preamble transmission in accordance with Proposal 4 in Step 1, the A-IoT device considers that the response has been normally received.

The "preamble index" included in Step B refers to a "time-frequency resource index" or a "subcarrier index and time domain resource index". In a case where the "time-frequency resource index" or the "subcarrier index and time domain resource index" included in the response received in Step B matches the subcarrier index and the time domain resource index selected by the A-IoT device for the preamble transmission in accordance with Proposal 4 in Step A, the A-IoT device considers that the response has been normally received.

<Proposal 6: Option 3>

The "preamble index" included in Step 2 refers to a "sequence index". In a case where the "sequence index" included in the response received in Step 2 matches the sequence selected by the A-IoT device for the preamble transmission in accordance with Proposal 4 in Step 1, the A-IoT device considers that the response has been normally received.

The "preamble index" included in Step B refers to a "sequence index". In a case where the "sequence index" included in the response received in Step B matches the sequence selected by the A-IoT device for the preamble transmission in accordance with Proposal 4 in Step A, the A-IoT device considers that the response has been normally received.

<Proposal 6: Summary>

With the above-described configuration, the A-IoT device can appropriately execute communication. Further, the preamble transmission conforming to the features of the A-IoT such as ultra-low power consumption and ultra-low complexity is provided.

<Proposal 7>

Proposal 7 relates to coexistence between the A-IoT and the normal UE. Regarding the coexistence between the A-IoT and the normal UE, the following Options 1 and 2 are provided.

<Proposal 7: Option 1>

The A-IoT device and the normal UE expect that time/frequency resources for the A-IoT Msg1/Msg2/Msg3/Msg4/MsgA/MsgB transmission and the transmission and reception of the signal of the normal UE do not overlap. In other words, the A-IoT device and the normal UE expect that the signal related to the RA in the A-IoT and the existing signal do not overlap.

<Proposal 7: Option 2>

The time/frequency resource used for the transmission of Msg1/Msg2/Msg3/Msg4/MsgA/MsgB is notified to the normal UE by, for example, higher layer signaling such as MIB, SIB, or RRC. In other words, information on the time/frequency resource of the signal related to the RA in the A-IoT is notified to the normal UE. The normal UE does not transmit and receive the signal in the notified time/frequency resource (the notified time/frequency resource is not used for the transmission and reception of the signal).

<Proposal 7: Variation>

Each option of Proposal 7 may be applied to a specific type of signal of the normal UE. For example, the above-described options may be applied to a synchronization signal such as a PSS and an SSS of the NR, a reference signal such as a demodulation reference signal (DMRS) and a channel state information reference signal (CSI-RS) of the NR, or a PRACH transmission signal of the NR.

<Proposal 7: Summary>

With the above-described configuration, the A-IoT device can appropriately execute communication. Further, the preamble transmission conforming to the features of the A-IoT such as ultra-low power consumption and ultra-low complexity is provided.

<Proposal 8>

Proposal 8 relates to an operation of the intermediate node/assisting node/UE in Topologies 2, 3, and 4.

<Proposal 8: Candidate Time/Frequency Resource>

In Topologies 2, 3, and 4, the candidate time/frequency resource for the A-IoT preamble transmission is provided to the intermediate node/assisting node/UE. The candidate time/frequency resource may be provided from the base station to the intermediate node/assisting node/UE by the DL information or may be fixed by the specification.
The intermediate node/assisting node/UE monitors the preamble transmission from the A-IoT device on the candidate time/frequency resource.
In a case where the target A-IoT device is the device type A/B, the intermediate node/assisting node/UE transmits the carrier wave for the backscattering transmission of the preamble of the A-IoT device on the candidate time/frequency resource.

<Proposal 8: After Successful Detection of Msg1>

The following options 1 and 2 are proposed for the operation of the intermediate node/assisting node/UE after the successful detection of Msg1.

<Proposal 8: After Successful Detection of Msg1: Option 1>

After the successful detection of Msg1 from the A-IoT device, the intermediate node/assisting node/UE forwards the "preamble index" included in Msg1 to the base station. The base station generates Msg2 for the response and transmits Msg2 to the intermediate node/assisting node/UE. The intermediate node/assisting node/UE forwards Msg2 from the base station to the A-IoT device.
After detecting Msg1 from the A-IoT device, the intermediate node/assisting node/UE forwards the detected preamble index to the base station within a certain time (a time duration). The certain time may be provided to the intermediate node/assisting node/UE by the DL information or may be fixed by the specification.

<Proposal 8: After Successful Detection of Msg1: Option 2>

The intermediate node/assisting node/UE generates Msg2 for the response. The intermediate node/assisting node/UE transmits generated Msg2 to the A-IoT device.
After detecting Msg1 from the A-IoT device, the intermediate node/assisting node/UE transmits Msg2 for the response within a certain time. The certain time may be provided to the intermediate node/assisting node/UE by the DL information or may be fixed by the specification.

<Proposal 8: After Successful Detection of Msg3>

The following Options 1 and 2 are proposed for the operation of the intermediate node/assisting node/UE after the successful detection of Msg3.

<Proposal 8: After Successful Detection of Msg3: Option 1>

After the successful detection of Msg3 from the A-IoT device, the intermediate node/assisting node/UE forwards the ID of the A-IoT device included in Msg3 to the base station. The base station generates Msg4 for the contention resolution and transmits Msg4 to the intermediate node/assisting node/UE. The intermediate node/assisting node/UE forwards Msg4 from the base station to the A-IoT device.
After detecting Msg3 from the A-IoT device, the intermediate node/assisting node/UE forwards the detected ID to the base station within a certain time. The certain time may be provided to the intermediate node/assisting node/UE by the DL information or may be fixed by the specification.

<Proposal 8: After Successful Detection of Msg3: Option 2>

The intermediate node/assisting node/UE generates Msg4 for the contention resolution. The intermediate node/assisting node/UE transmits generated Msg4 to the A-IoT device.

After detecting Msg3 from the A-IoT device, the intermediate node/assisting node/UE transmits Msg4 for the contention resolution within a certain time. The certain time may be provided to the intermediate node/assisting node/UE by the DL information or may be fixed by the specification.

<Proposal 8: After Successful Detection of MsgA>

The following Options 1 and 2 are proposed for the operation of the intermediate node/assisting node/UE after the successful detection of MsgA.

<Proposal 8: After Successful Detection of MsgA: Option 1>

After the successful detection of MsgA from the A-IoT device, the intermediate node/assisting node/UE forwards the A-IoT device's preamble index/ID included in MsgA to the base station. The base station generates MsgB for the response and the contention resolution and transmits MsgB to the intermediate node/assisting node/UE. The intermediate node/assisting node/UE forwards MsgB from the base station to the A-IoT device.

After detecting MsgA from the A-IoT device, the intermediate node/assisting node/UE forwards the detected preamble index/ID to the base station within a certain time. The certain time may be provided to the intermediate node/assisting node/UE by the DL information or may be fixed by the specification.

<Proposal 8: After Successful Detection of MsgA: Option 2>

The intermediate node/assisting node/UE generates MsgB for the response and the contention resolution. The intermediate node/assisting node/UE transmits the generated MsgB to the A-IoT device.

After detecting MsgA from the A-IoT device, the intermediate node/assisting node/UE transmits MsgB for the response and the contention resolution within a certain time. The certain time may be provided to the intermediate node/assisting node/UE by the DL information or may be fixed by the specification.

<Proposal 8: Summary>

With the above-described configuration, the A-IoT device can appropriately execute communication. Further, the preamble transmission conforming to the features of the A-IoT such as ultra-low power consumption and ultra-low complexity is provided.

<Proposal 9>

Proposal 9 relates to coexistence between a signal between the intermediate node/assisting node/UE (UE of Topology 4) and the base station or between the intermediate node/assisting node/UE and the normal UE, and Msg1/Msg2/Msg3/Msg4/MsgA/MsgB. In Proposal 9, the following Options 1 to 3 are provided.

<Proposal 9: Option 1>

The intermediate node/assisting node/UE assumes that the time/frequency resource for the A-IoT device to transmit Msg1/Msg2/Msg3/Msg4/MsgA/MsgB does not overlap with the signal (time/frequency resource) between the intermediate node/assisting node/UE and the base station. The signal between the intermediate node/assisting node/UE and the base station may be DL/UL.

The intermediate node/assisting node/UE assumes that the time/frequency resource for the A-IoT device to transmit Msg1/Msg2/Msg3/Msg4/MsgA/MsgB does not overlap with the signal (time/frequency resource) between the intermediate node/assisting node/UE and the normal UE. The signal between the intermediate node/assisting node/UE and the normal UE may be DL/UL.

<Proposal 9: Option 2>

In a case where the time/frequency resource used for the A-IoT device to transmit Msg1/Msg2/Msg3/Msg4/MsgA/MsgB overlaps with the signal between the intermediate node/assisting node/UE and the base station, the intermediate node/assisting node/UE prioritizes the transmission of Msg1/Msg2/Msg3/Msg4/MsgA/MsgB of the A-IoT device.

In a case where the time/frequency resource used for the A-IoT device to transmit Msg1/Msg2/Msg3/Msg4/MsgA/MsgB overlaps with the signal between the intermediate node/assisting node/UE and the normal UE, the intermediate node/assisting node/UE prioritizes the transmission of Msg1/Msg2/Msg3/Msg4/MsgA/MsgB of the A-IoT device.

<Proposal 9: Option 3>

In a case where the time/frequency resource used for the A-IoT device to transmit Msg1/Msg2/Msg3/Msg4/MsgA/MsgB overlaps with the signal between the intermediate node/assisting node/UE and the base station, the intermediate node/assisting node/UE prioritizes the signal between the intermediate node/assisting node/UE and the base station.

In a case where the time/frequency resource used for the A-IoT device to transmit Msg1/Msg2/Msg3/Msg4/MsgA/MsgB overlaps with the signal between the intermediate node/assisting node/UE and the normal UE, the intermediate node/assisting node/UE prioritizes the signal between the intermediate node/assisting node/UE and the normal UE.

<Proposal 9: Variation>

Each option of Proposal 9 may be applied to a specific type of signal of the intermediate node/assisting node/UE. For example, the above-described options may be applied to a synchronization signal such as a PSS and an SSS of the NR, a reference signal such as a demodulation reference signal (DMRS) and a channel state information reference signal (CSI-RS) of the NR, or a PRACH transmission signal of the NR.

<Proposal 9: Summary>

With the above-described configuration, the A-IoT device can appropriately execute communication. Further, the preamble transmission conforming to the features of the A-IoT such as ultra-low power consumption and ultra-low complexity is provided.

<Capability>

The A-IoT device may report the following capability information (A-IoT capability) to the base station, the intermediate node, the assisting node, and the terminal.

· Device type of A-IoT

The intermediate node, the assisting node, and the terminal may report the following capability information to the base station and the A-IoT device.

· Information on whether to support communication with an A-IoT device
· Device type of A-IoT to be supported

Each of the above-described proposals and options may be applied in a case where the A-IoT device, the intermediate node, and the assisting node support the corresponding proposal and option or in a case where the corresponding proposal and option are enabled by higher layer signaling.

<Others>

A new term may be defined for the A-IoT for the frequency domain resource unit. For example, as for the term "subcarrier," another term may be defined for the A-IoT.

A new term may be defined for the A-IoT for the time domain resource unit. For example, as for the terms "symbol", "slot", "subframe", and "frame," another term may be defined for the A-IoT.

The A-IoT device may be referred to as an A-IoT UE, an A-IoT terminal, an A-IoT node, a terminal, or a communication apparatus. Further, the A-IoT device may be simply referred to as an A-IoT.

The A-IoT device may be regarded as a device having lower complexity than the NB-IoT device. The complexity may be regarded as, for example, complexity of a configuration/structure related to a minimum/maximum transmission/-

reception bandwidth supported by the device and/or a maximum DL/UL data rate supported by the device and/or a maximum DL/UL transport block (TB) size supported by the device and/or a Layer 2 buffer size. The configuration/-structure may be replaced with hardware. TB is an abbreviation for Transport Block.

The base station, the intermediate node, the assisting node, and the terminal (UE of Topology 4) may be referred to as an A-IoT base station, an A-IoT parent node, an A-IoT NB, a base station, or a communication apparatus. The identity may be replaced with an identifier.

The initial access may be, for example, cell search, time/frequency synchronization, and MIB acquisition.

<Configuration of Base Station>

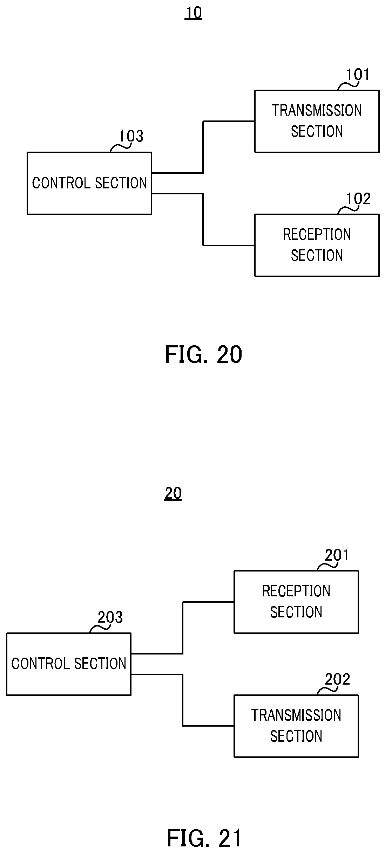

FIG. 20 is a block diagram illustrating one example of a configuration of base station 10 according to the embodiment. Base station 10 includes, for example, transmission section 101, reception section 102, and control section 103. Base station 10 communicates with device 20 (see FIG. 21) via radio. Base station 10 may be an intermediate node, an assisting node, or a terminal (a terminal of SL that communicates with device 20).

Transmission section 101 transmits a downlink (DL) signal to device 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of device 20. Moreover, the DL signal may include higher layer control information (e.g., Radio Resource Control (RRC) control information). Furthermore, the DL signal may include a reference signal.

Channels used for DL signal transmission include, for example, data channels and control channels. For example, the data channels may include a Physical Downlink Shared Channel (PDSCH), and the control channels may include a Physical Downlink Control Channel (PDCCH). Base station 10 transmits, to device 20, the control information using PDCCH, and the downlink data signal using PDSCH, for example.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as DMRS and PTRS is used for demodulation of a downlink data signal and is transmitted by using PDSCH.

Reception section 102 receives an uplink (UL) signal transmitted from device 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from device 20 and/or the data, control information, and/or the like acquired from the higher layer. Information on the allocated resource(s) may be included in control information to be transmitted to device 20.

Control section 103 configures a PUCCH resource, as an example of the resource to be used for transmitting and receiving a UL signal. Information on the PUCCH configuration such as a PUCCH cell timing pattern (PUCCH configuration information) may be indicated to device 20 by RRC.

In a case where base station 10 is an intermediate node, an assisting node, or a terminal (SL terminal), transmission section 101, reception section 102, and control section 103 may operate as follows (hereinafter, for simplicity of description, base station 10 is assumed to be an intermediate node).

Reception section 102 may receive resource information on a signal related to the RA procedure of device 20 from a base station (base station for intermediate node). The signal related to the RA procedure may be Msg1/ Msg2/ Msg3/ Msg4/ MsgA/ MsgB, for example. Control section 103 may monitor the signal related to the RA procedure of device 20 based on the resource information.

In a case where the detection of the signal related to the RA procedure of device 20 has been successful, transmission section 101 may transmit (forward) the information included in the signal to the base station. The information may be, for example, a preamble index or an ID of device 20.

Control section 103 may assume that the signal related to the RA procedure of device 20 and the signal between the intermediate node and the base station do not overlap or may assume that the signal related to the RA procedure of device 20 and the signal between the intermediate node and the normal UE do not overlap.

In a case where the signal related to the RA procedure of device 20 and the signal between the intermediate node and the base station overlap or in a case where the signal related to the RA procedure of device 20 and the signal between the intermediate node and the normal UE overlap, control section 103 may prioritize the signal related to the RA procedure of device 20.

In a case where the signal related to the RA procedure of device 20 and the signal between the intermediate node and the base station overlap or in a case where the signal related to the RA procedure of device 20 and the signal between the intermediate node and the normal UE overlap, control section 103 may prioritize the signal between the intermediate node and the base station or may prioritize the signal between the intermediate node and the normal UE.

<Configuration of Device>

FIG. 21 is a block diagram illustrating one example of a configuration of device 20 according to the embodiment. Device 20 includes, for example, reception section 201, transmission section 202, and control section 203. Reception section 201 and transmission section 202 may be regarded as a communication section. Device 20 communicates with base station 10 by radio. Device 20 may be, for example, a device having lower complexity than the NB-IoT device. For example, device 20 may be an A-IoT device.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of device 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, device 20 receives control information from base station 10 using PUCCH and transmits an uplink data signal using PUSCH.

The reference signal included in the UL signal may include, for example, at least one of a DMRS, PTRS, CSI-RS, SRS, and PRS. For example, the reference signals such as DMRS and PTRS are used for demodulation of an uplink data signal and are transmitted using an uplink channel (e.g., PUSCH).

Control section 203 controls communication operations of device 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel. State Information (CSI), or Scheduling Request (SR). The information to be fed back to base station 10 may be included in UCI. The UCI is transmitted in a PUCCH resource.

Control section 203 configures a PUCCH resource based on the configuration information (e.g., configuration information such as a PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Control section 203 may decide to execute the RA procedure based on a trigger from base station 10 or without the trigger. Reception section 201 may receive the signal related to the RA procedure of device 20 by using a smaller number of subcarriers than the subcarriers of the signal related to the RA procedure of the NB-IoT device. Transmission section 202 may transmit the signal related to the RA procedure of device 20 by using a smaller number of subcarriers than the subcarriers of the signal related to the RA procedure of the NB-IoT device.

Reception section 201 and transmission section 202 may select a subcarrier for receiving and transmitting the signal related to the RA procedure of device 20 from among a plurality of subcarrier candidates. Reception section 201 and transmission section 202 may receive and transmit the signal related to the RA procedure of device 20 by using one subcarrier. Reception section 201 and transmission section 202 may randomly select a time domain resource for the signal related to the RA procedure of device 20 from among a plurality of time domain resource candidates. In Step 2 or Step B of the RA procedure of device 20, transmission section 202 may transmit a subcarrier index, a time-frequency resource index, a subcarrier index and a time domain resource index, or a sequence index.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

<Hardware Structure and the like>

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

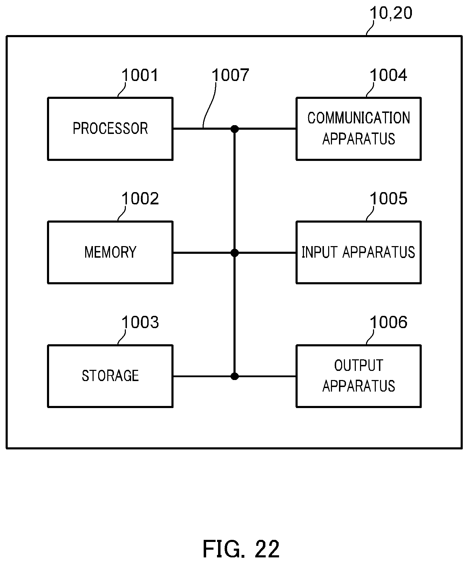

For example, the base station, the device, and the like according to an embodiment of the present disclosure may function as a computer that performs the processing of the wireless communication method of the present disclosure. FIG. 22 is a diagram illustrating an example of a hardware configuration of the base station and the device according to the embodiment. Base station 10 and device 20 may be configured as a computer apparatus including processor 1001, memory 1002, storage 1003, communication apparatus 1004, input apparatus 1005, output apparatus 1006, bus 1007, and the like in a physical manner.

Note that in the present disclosure, the words such as an apparatus, a circuit, a device, a section, a unit, and so on can be interchangeably interpreted. The hardware structure of the base station 10 and the user device 20 may be configured to include one or more of apparatuses illustrated in the drawings, or may be configured not to include part of apparatuses

Each function of base station 10 and devices 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described controller 103 or controller 203, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 203 of device 20 may be implemented by control programs that are stored in the memory 1002 and that operate on the processor 1001, and other functional blocks may be implemented likewise. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blu-ray (registered trademark) disk), a removable disk, a hard disk drive, a smart card, a flash memory device (e.g., a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

The input apparatus 1005 is an input device that receives input from the outside (e.g., a keyboard, a mouse, a microphone, a switch, a button, a sensor, and so on). The output apparatus 1006 is an output device that allows sending output to the outside (e.g., a display, a speaker, a Light Emitting Diode (LED) lamp, and so on). Note that the input apparatus 1005 and the output apparatus 1006 may be provided in an integrated structure (e.g., a touch panel).

Furthermore, these types of apparatus, including the processor 1001, the memory 1002, and others, are connected by a bus 1007 for communicating information. The bus 1007 may be formed with a single bus or may be formed with buses that vary between pieces of apparatus.

Also, base station 10 and the devices 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

<Notification and Signaling of Information>

Notification of information is by no means limited to the embodiments described in the present disclosure, and other methods may be used as well. For example, notification of information in the present disclosure may be implemented by using physical layer signaling (e.g., downlink control information (DCI), uplink control information (UCI)), higher layer signaling (e.g., Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

<Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (e.g., a combination of LTE or LTE-A and 5G, and the like) for application.

<Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

<Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (e.g., Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

<Direction of Input and Output>

The information or signals described in this disclosure may be output from a higher layer (or lower layer) to a lower layer (or higher layer). The information or signals may be input or output through multiple network nodes.

<Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

<Determination Method>

A decision or a determination in an embodiment of the present invention may be realized by a value (0 or 1) represented by one bit, by a boolean value (true or false), or by comparison of numerical values (e.g., comparison with a predetermined values).

<Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Variations, alternatives, replacements, etc., of the present invention may be possible without departing from the subject matter and the scope of the present invention defined by the descriptions of claims. Therefore, the descriptions of the present specification are for illustrative purposes only and are not intended to be limitations to the present invention.

<Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

<Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

<System and Network>

As used in the present disclosure, the terms "system" and "network" are used interchangeably.

<Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

<Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

<Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

<Base Station/Mobile Station>

At least one of a base station and a mobile station may be referred to as a "transmitting apparatus," a "receiving apparatus," a "communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (e.g., which may be referred to as "Device-to-Device (D2D)," "Vehicle-to-Everything (V2X)," and the like). In this case, devices 20 may have the functions of the base stations 10 described above. The words such as "uplink" and "downlink" may be interpreted as the words corresponding to the device-to-device communication (e.g., "sidelink"). For example, an uplink channel, a downlink channel and so on may be interpreted as a sidelink channel.

Likewise, the terminal in the present disclosure may be interpreted as base station. In this case, the base station 10 may have the functions of device 20 described above.

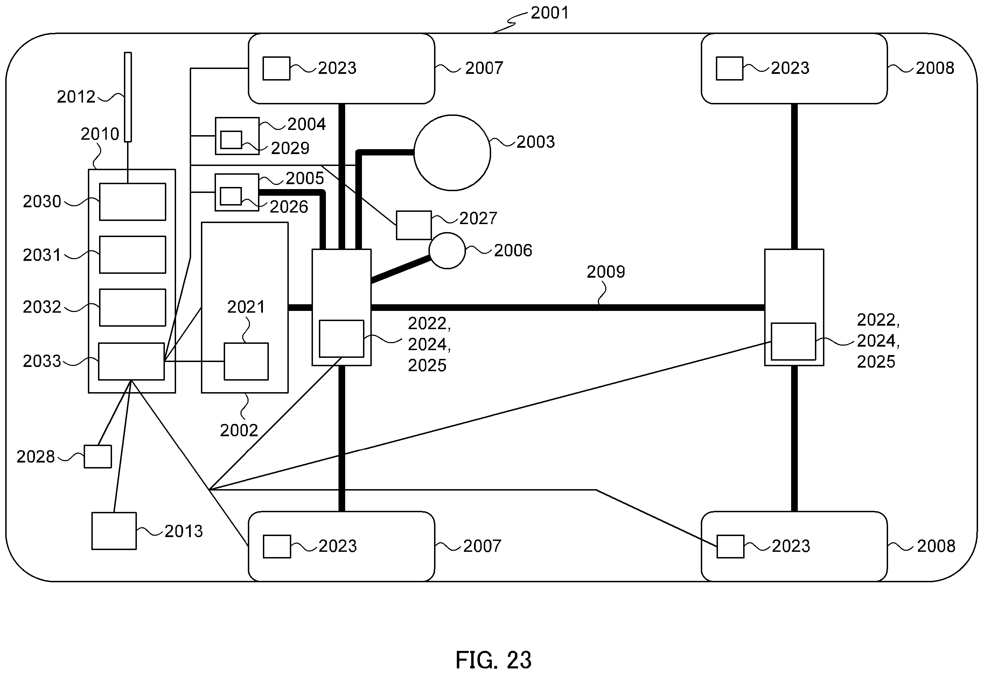

FIG. 23 illustrates an example of a configuration of a vehicle 2001. As illustrated in FIG. 23, the vehicle 2001 includes a drive section 2002, a steering section 2003, an accelerator pedal 2004, a brake pedal 2005, a shift lever 2006, a front wheel 2007, a rear wheel 2008, an axle 2009, an electronic control unit 2010, various sensors 2021-2029, an information service section 2012, and a communication module 2013. The aspects/embodiments described in the present disclosure may be applied to a communication apparatus mounted in the vehicle 2001, and may be applied to, for example, the communication module 2013.

The drive section 2002 may include, for example, an engine, a motor, and a hybrid of an engine and a motor. The steering section 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

The information service section 2012 may include an input device (e.g., a keyboard, a mouse, a microphone, a switch, a button, a sensor, a touch panel, and the like) for receiving input from the outside, or may include an output device (e.g., a display, a speaker, an LED lamp, a touch panel, and the like) for implementing output to the outside.

A driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, the driving support system section 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive section 2002, the steering section 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010, information obtained based on the signals, and information based on an input from the outside (a user) obtained via the information service section 2012, to the external apparatus via radio communication. The electronic control unit 2010, the various sensors 2021 to 2029, the information service section 2012, and the like may be referred to as input sections that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service section 2012 provided in the vehicle 2001. The information service section 2012 may be referred to as an output section that outputs information (e.g., outputs information to devices, such as a display and a speaker, based on the PDSCH received by the communication module 2013 (or data/information decoded from the PDSCH)).

Further, the communication module 2013 stores the various types of information received from the external devices in the memory 2032 available to the microprocessor 2031. Based on the information stored in the memory 2032, the microprocessor 2031 may control the drive section 2002, the steering section 2003, the accelerator pedal 2004, the brake pedal 2005, the shift lever 2006, the front wheel 2007, the rear wheel 2008, the axle 2009, the sensors 2021-2029 etc., mounted in the vehicle 2001.

<Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

<Reference Signal>

A reference signal may be abbreviated as an "RS," and may be referred to as a "pilot" and so on, depending on which standard applies.

<Meaning of "Based On">

The phrase "based on" (or "on the basis of') as used in the present disclosure does not mean "based only on" (or "only on the basis of"), unless otherwise specified. In other words, the phrase "based on" (or "on the basis of') means both "based only on" and "based at least on" ("only on the basis of" and "at least on the basis of").

<"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

<Means>

"Means" included in the configuration of each of the above apparatuses may be replaced by "parts", "circuits", "devices", etc.

<Open Form>

In the case where the terms "include", "including" and variations thereof are used in the present disclosure, these terms are intended to be comprehensive in the same way as the term "comprising". Further, the term "or" used in the present specification is not intended to be an "exclusive or".

<Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (e.g., 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (e.g., 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (e.g., the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (e.g., a normal TTI, a subframe, or the like) may be interpreted as a TTI having a time length exceeding 1 ms, and a short TTI (e.g., a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "subcarrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

<Maximum Transmit Power>

The "maximum transmit power" described in the present disclosure may mean a maximum value of the transmit power, the nominal UE maximum transmit power, or the rated UE maximum transmit power.

<Article>

In the present disclosure, where an article is added by translation, for example "a", "an", and "the", the disclosure may include that the noun following these articles is plural.

<"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

Industrial Applicability

An aspect of the present disclosure is useful for radio communication systems.

Reference Signs List

10 Base station
20 Device
101, 202 Transmission section
102, 201 Reception section
103, 203 Control section

**Claims**

1. A device having lower complexity than a Narrow Band-Internet of Things (NB-IoT) device, the device comprising:

   a control section that determines to execute a random access procedure; and
   a communication section that transmits and receives a signal related to the random access procedure, wherein, the communication section transmits and receives the signal related to the random access procedure of the device by using a smaller number of subcarriers than one or more subcarriers for a signal related to a random access procedure of the NB-IoT device.

2. The device according to claim 1, wherein, the communication section selects a subcarrier for transmitting and receiving the signal related to the random access procedure of the device from among a plurality of subcarrier candidates.

3. The device according to claim 1, wherein, the communication section transmits and receives the signal related to the random access procedure of the device by using one subcarrier.

4. The device according to claim 1, wherein, the communication section randomly selects a time domain resource for the signal related to the random access procedure of the device from among a plurality of time domain resource candidates.

5. The device according to claim 1, wherein, the communication section transmits a subcarrier index, a time-frequency resource index, a subcarrier index and a time domain resource index, or a sequence index in Step 2 or Step B of the random access procedure of the device.

6. A communication method for a device having lower complexity than a Narrow Band-Internet of Things (NB-IoT) device, the communication method comprising:

determining to execute a random access procedure;
transmitting and receiving a signal related to the random access procedure;
transmitting and receiving the signal related to the random access procedure of the device by using a smaller number of subcarriers than one or more subcarriers for a signal related to a random access procedure of the NB-IoT device.

Cell

10

20

FIG. 1

→ Ambient IoT data/signaling

BS

Ambient IoT device

Topology 1

FIG. 2

→ Ambient IoT data/signaling

Uu

BS

intermediate node

Ambient IoT device

Topology 2

FIG. 3

Topology 3 with downlink assistance

FIG. 4

Topology 3 with uplink assistance

FIG. 5

Ambient IoT data/signaling

UE

Ambient IoT
device

Topology 4

FIG. 6

FIG. 7

FIG. 8

FIG. 9

FIG. 10

EP 4 773 715 A1

A11b                    A11b                    A11b

← periodicity →    ← periodicity →    ......

→ time

a freq. domain
resource unit

frequency resource
for preamble
transmission

A11a

a time domain
resource unit

FIG. 11

FIG. 12

EP 4 773 715 A1

FIG. 13

EP 4 773 715 A1

FIG. 14

FIG. 15

EP 4 773 715 A1

initial access procedure is triggered

A-IoT device select one among these resources

periodicity

periodicity

time

16a

FIG. 16

initial access procedure is triggered

A-IoT device select one among these resources

time

17a

FIG. 17

FIG. 18

S11

initial access procedure
triggered

S12

Timer starts with random
duration

S13

Timer expires?

No

S15

Waiting

Yes

S16

Timer expires?

No

Yes

S14

A-IoT device can transmit
its UL information

FIG. 19

10

TRANSMISSION
SECTION
101

CONTROL SECTION
103

RECEPTION
SECTION
102

FIG. 20

20

RECEPTION
SECTION
201

CONTROL SECTION
203

TRANSMISSION
SECTION
202

FIG. 21

10,20

FIG. 22

FIG. 23

## INTERNATIONAL SEARCH REPORT

| International application No. |
|---|
| **PCT/JP2023/031346** |

**A. CLASSIFICATION OF SUBJECT MATTER**

*H04W 74/08*(2024.01)i; *H04W 52/02*(2009.01)i; *H04W 72/02*(2009.01)i; *H04W 72/0446*(2023.01)i; *H04W 72/0453*(2023.01)i

FI: H04W74/08; H04W52/02; H04W72/02; H04W72/0446; H04W72/0453

According to International Patent Classification (IPC) or to both national classification and IPC

**B. FIELDS SEARCHED**

Minimum documentation searched (classification system followed by classification symbols)

H04W74/08; H04W52/02; H04W72/02; H04W72/0446; H04W72/0453

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | HUAWEI. HISILICON. Discussion on feasibility assessment and required functionalities for Ambient IoT [online]. 3GPP TSG RAN #100 RP-231283. 05 June 2023<br>sections 2, 4.5 | 1-4, 6 |
| A | sections 2, 4.5 | 5 |
| Y | OPPO. Running CR for TS 38.300 for Rel-18 eRedCap [online]. 3GPP TSG RAN WG2 #123 R2-2309063. 25 August 2023<br>section 16.13 | 1-4, 6 |
| A | section 16.13 | 5 |
| Y | HUAWEI. HISILICON. Early identification and access restriction for eRedCap UEs [online]. 3GPP TSG RAN WG2 #123 R2-2308237. 11 August 2023<br>section 2.1 | 2-4 |
| A | section 2.1 | 1, 5, 6 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## EP 4 773 715 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V17.3.0*, December 2022
- New SID: Study on Ambient IoT. *RP-222685, 3GPP TSG RAN Meeting #97-e*, September 2022
- *3GPP TR 38.848 V0.1.0*, March 2023
- *3GPP TS 36.211 V16.7.0*, September 2021
- *3GPP TS 38.211 V17.5.0*, June 2023